(19) Europäisches Patentamt
European Patent Office
Office européen des brevets

(11) **EP 2 102 302 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(21) Anmeldenummer: **07822843.4**

(22) Anmeldetag: **23.11.2007**

(51) Int Cl.:
**C09J 7/02** (2006.01)

(86) Internationale Anmeldenummer:
**PCT/EP2007/062747**

(87) Internationale Veröffentlichungsnummer:
**WO 2008/068150 (12.06.2008 Gazette 2008/24)**

(54) **MEHRLAGIGES SELBSTKLEBEBAND**

MULTI-PLY SELF-ADHESIVE TAPE

RUBAN AUTO-ADHÉSIF MULTICOUCHE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.12.2006 DE 102006057800**

(43) Veröffentlichungstag der Anmeldung:
**23.09.2009 Patentblatt 2009/39**

(73) Patentinhaber: **TESA SE**
**20253 Hamburg (DE)**

(72) Erfinder:
• **NEUBERT, Ingo**
**22850 Norderstedt (DE)**
• **LÜHMANN, Bernd**
**22844 Norderstedt (DE)**

(56) Entgegenhaltungen:
**EP-A- 0 980 902      WO-A-2006/000505**

**Beschreibung**

Die vorliegende Erfindung betrifft ein Selbstklebeband aus aufeinander laminierten Haftklebeschichten.

Doppelseitig klebende Selbstklebebänder werden typischerweise zum Fixieren und zum Verbinden von verschiedensten Materialien verwendet. Die Anwendungspalette ist hierbei sehr vielfältig. So werden heute eine Vielzahl von unterschiedlichen Selbstklebbändern in der Automobilindustrie zum Beispiel zum Verkleben von Tür- und Zierleisten und in der Elektronikindustrie zum Beispiel zum Verkleben von Displays, Batterien oder Lautsprechern unter anderem in mobilen Telefonen, Digitalkameras oder Pocket-Computern eingesetzt. Durch die Verwendung von Haftklebebändern können die einzelnen technischen Bauteile Platz sparender, deutlich schneller und damit effizienter und kostengünstiger montiert werden.

Für die Verwendung in der Automobilindustrie und Elektronikindustrie werden an die Selbstklebebänder hohe Leistungsanforderungen gestellt. Wichtige Kriterien beinhalten hierbei eine gute Verklebungsfestigkeit, insbesondere eine hohe Scherfestigkeit, eine hohe Alterungsbeständigkeit und nicht zuletzt die elektronische Verträglichkeit. Für entsprechende Anwendungen werden daher vornehmlich Selbstklebebänder auf Basis von hochvernetzten Polyacrylatklebmassen genutzt.

Ausgewählte Anwendungen bedingen besondere Anforderungen an Dicke und Dickentoleranz der Klebebänder. So sind zum Beispiel bei der Verklebung von Displayfenstern in mobilen Telefonen nur Selbstklebebänder mit einer genau wählbaren Dicke geeignet, die gleichzeitig eine sehr geringe Dickentoleranz aufweisen. Die Summe aus der Dicke des Displayfensters und der des Selbstklebebandes muss exakt in die ausgesparte Klebfuge passen. Ein weiteres Beispiel für eine spezielle Dickenanforderung an Selbstklebebänder ist bei der Herstellung von Folientastaturen gegeben. Hier werden üblicherweise Selbstklebebänder als Abstandshalter zwischen den einzelnen elektrischen Funktionsschichten verwendet. Bei dieser Anwendung ist die Verwendung von 250 $\mu$m oder noch dickeren Klebebändern keine Seltenheit. Die Anwendungen erfordern eine präzis definierte Dicke des Selbstklebebandes. Die Einstellung der Gesamtdicke der Selbstklebebänder erfolgt typischerweise durch Adjustierung der Dicke des Trägermaterials - häufige Verwendung finden hier zum Beispiel Polyesterfolien - und/oder der Dicke der Klebmassenbeschichtung. Bei dicken Polyester-Trägerfolien ergeben sich infolge der mit wachsender Dicke stark ansteigenden Biegesteifigkeit hinsichtlich der maximal nutzbaren Dicke Einschränkungen. Typische im Markt befindliche doppelseitige Selbstklebebandprodukte bestehen daher aus einer Polyester-Trägerfolie in einer Dicke von zum Beispiel 9 bis 175 $\mu$m, die beidseitig zum Beispiel mit 50 g/m$^2$ einer Acrylatklebmasse beschichtet ist. Produkte mit noch dickeren Polyester-Trägerfolien, deren Dicke 200 $\mu$m überschreitet, lassen sich aufgrund der hohen Biegesteifigkeit nur noch sehr eingeschränkt zu Rollenware verarbeiten.

Der zweiten Möglichkeit, der Anpassung der Produktdicke über die Dicke der Klebmassebeschichtung, sind ebenfalls technische Grenzen gesetzt. Bei der Verarbeitung von Haftklebmassen auf Basis wässrige r Disp ersionen sind maximale Haftklebmassendicken von typischerweise ca. 70 g/m$^2$ erreichbar. Höhere Haftklebmassestärken können bei der Beschichtung aus Lösemittel erreicht werden. Eine geeignete Trocknungstechnik vorausgesetzt sind hier Haftklebmassendicken von bis zu etwa 120 g/m$^2$ realisierbar. Beispielhaft sei hier das Produkt tesafix® 4965 erwähnt, das aus einem 12 $\mu$m dicken Polyester-Trägerfilm, welcher beidseitig mit je 100 g/m$^2$ einer Acrylatklebmasse beschichtet ist, besteht. Ein noch höherer Klebmassenauftrag ist mit Hilfe der üblichen Lösemittelverfahren aus ökonomischer Sicht nicht realisierbar, da keine blasenfreie Beschichtung beziehungsweise nur eine Trocknung mit sehr langsamen, nicht ökonomischen vertretbaren Prozessgeschwindigkeiten möglich sind.

Eine weitere Möglichkeit der Erzeugung dicker Haftklebemassebeschichtungen besteht in der Beschichtung von Klebmasseschmelzen oder von Prepolymeren, die nachfolgend im bereits beschichteten Zustand vernetzt werden. Nachteilig sind die typischerweise starke Begrenzung der maximal einsetzbaren Molmasse im Falle von Schmelzhaftklebemassen, die oft hohen Restgehalte an nicht umgesetzten Monomeren sowie oligomere Massebestandteile im Falle des Einsatzes von Prepolymeren.

Eine weitere Möglichkeit für die Herstellung dickerer Haftklebebänder ergibt sich aus der Laminierung zweier oder mehrerer Haftklebmasseschichten. Dieses Verfahren funktioniert recht gut bei nicht vernetzten Haftklebmassen wie zum Beispiel Klebmassen auf Basis von Polyisobutylen, physikalisch vernetzten Haftklebmassen wie zum Beispiel Klebmassen auf Basis von Styrol-Block-Copolymeren, insbesondere wenn hier die Laminierung bei erhöhter Temperatur erfolgt, oder wenig vernetzten Haftklebemassen wie zum Beispiel Klebmassen auf Basis von gering vernetztem Naturkautschuk. Die Laminierung vernetzter Acrylat-Haftklebmassen-Schichten führt hingegen häufig zu einem Laminat mit einem verminderten Eigenschaftsprofil aufgrund geringe r Kaschierbeziehungsweise Verbundfestigkeit der Schichten. Vermutet wird, dass die Polymerketten der Acrylat-Haftklebmasse aufgrund eines hohen Vernetzungsgrades nicht fähig sind, Verschlaufungen genügender Länge an der Grenzfläche zu bilden. Dieser Umstand wird bei einigen Produkten gezielt genutzt, um ein doppelseitiges Selbstklebeband ohne Trennmaterial (Trennpapier oder Trennfolie) als Rollenware anzubieten, so dass zwei Lagen der Polyacrylat-Haftklebmasseschicht direkt in dauerhaften Kontakt kommen. Das Abwickeln dieser Produkte ist auch noch nach Jahren der Lagerung ohne Probleme möglich. tesafix® 56661 ist ein Beispiel für ein solches Produkt.

Aufgabe der vorliegenden Erfindung ist es, ein Selbstklebeband aus zwei oder mehreren Haftklebmasseschichten zur Verfügung zu stellen, das sich durch eine hohe Verbundfestigkeit des Laminats auszeichnet. Hierbei soll das Eigenschaftsprofil des Selbstklebebands nicht oder nur geringfügig von dem der entsprechenden Haftklebemonoschicht abweichen.

Gelöst wird diese Aufgabe durch ein Selbstklebeband, wie es im Hauptanspruch niedergelegt ist. Gegenstand der Unteransprüche sind vorteilhafte Weiterentwicklungen des Erfindungsgegenstandes.

Demgemäß betrifft die Erfindung ein Selbstklebeband, enthaltend ein Laminat aus mindestens zwei direkt aufeinander laminierten Haftklebmasseschichten A und B, wobei eine oder beide der aufeinanderzulaminierenden Oberflächen der Haftklebemasseschichten A und B vor dem Aufeinanderlaminieren chemisch und/oder physikalisch vorbehandelt sind und wobei die Scherfestigkeit $t^S_{A/B}$ des Selbstklebebandes bei 25 °C, 40 °C und 70 °C und einer Gewichtsbelastung von 1000 g mindestens 80 % der Scherfestigkeit $t^S_o$ der Haftklebeschicht A oder Haftklebeschicht B beträgt, wobei $t^S_o$ die Scherfestigkeit der Haftklebeschicht mit der geringeren Scherfestigkeit darstellt.

Sollten mehr als zwei Haftklebemassenschichten aufeinander laminiert werden, muss erfindungsgemäß sichergestellt sein, dass jeweils zumindest eine der beiden aufeinanderzulaminisierenden Oberflächen der Haftklebemasseschichten chemisch und/oder physikalisch vorbehandelt sind.

Gemäß einer bevorzugten Ausführungsform der Erfindung ist die Scherfestigkeit des Selbstklebebandes bei 25 °C, 40 °C und 70 °C und einer Gewichtsbelastung von 1000 g größer als 10 000 min.

In der vorliegenden Erfindung wird ein Laminat aus zwei oder mehreren Klebmasseschichten hergestellt, wobei mindestens eine der beiden zu laminierenden Klebmasseoberflächen unmittelbar vor der Laminierung chemisch und/oder physikalisch vorbehandelt wird. Als chemische Vorbehandlung kann eine polare oder reaktive Beschichtung, dem Fachmann auch als Primerung bekannt, verwendet werden. Als physikalische Vorbehandlungsmethoden kommen bevorzugt die Flammen-, Plasma- oder Coronavorbehandlung zum Einsatz. In einer bevorzugten Ausführung der vorliegenden Erfindung wird mindestens eine der zu laminierenden Klebmasseoberflächen unmittelbar vor dem Laminierprozess einer Coronabehandlung unterzogen.

Die charakteristische Eigenschaft des erfindungsgemäßen Selbstklebebandes ist eine besonders gute Verbundfestigkeit der laminierten Klebmasseschichten.

Diese besonders gute Verbundfestigkeit lässt sich zum Beispiel durch einen Schertest nachweisen. Die Ergebnisse von Schertests sind typischerweise stark abhängig von der Natur der Klebmasse und der Prüfbedingungen. Zum Nachweis der Verbundfestigkeit zweier Klebmasseschichten unabhängig vom Typ der Klebmasse eignet sich sehr gut ein Schertest in Anlehnung an die PSTC-7. Von einer sehr guten Verbundfestigkeit kann ausgegangen werden, wenn entsprechend Gleichung (1)

$$P_{Laminat} = 100 * t^S_{A/B} / t^S_o \qquad\qquad (1)$$

$P_{Laminat}$ - prozentuales Verhältnis zwischen der Scherfestigkeit eines Laminats zu der Scherfestigkeit einer der zur Bildung des Laminats eingesetzten Klebmasseschicht

$t^S_{A/B}$ - Scherfestigkeit in Minuten eines Laminats aus zwei Klebmasseschichten A und B

$t^S_o$ - Scherfestigkeit in Minuten der Klebmassemonoschicht A oder B

$P_{Laminat}$ größer oder gleich 80 % ist. Das bedeutet, dass die Scherfestigkeit des Laminats $t^S_{A/B}$ und somit auch der Grenzfläche nicht geringer als 80 % der Scherfestigkeit der nicht laminierten $t^S_o$ Klebmasse(mono)schicht ist. Abweichungen in der Messung der Scherfestigkeit durch die unterschiedlichen Dicken der nicht laminierten und der laminierten Proben werden vernachlässigt.

Bei unterschiedlichen Klebmasseschichten A und B wird der Wert $t^S_o$ für die Klebmassemonoschicht mit der geringeren Scherfestigkeit gemessen und angegeben.

Die Gleichung ist ebenfalls für Laminate, die aus mehr als zwei Klebmasseschichten besteht, anwendbar.

Die Scherfestigkeit des erfindungsgemäßen Selbstklebebandes lässt sich ebenfalls durch quantitative Verfolgung der Scherdeformation (gemessen wird der Scherweg bei Gewichtsbelastung) als Funktion der Zeit ermitteln. Eine Meßmethode sowie ein zugehöriges Gerät sind in der DE 200 14 891 U1 beschrieben. Auf dieses Dokument wird ausdrücklich Bezug genommen, und es ist Teil dieser Offenbarung. Bei diesem Test wird der Prüfling ebenfalls wie beim Schertest parallel zur Verklebungs- beziehungsweise Laminationsfläche mit einem Gewicht belastet. Im Gegensatz zum Schertest entsprechend PSTC-7 wird nicht die Scherfestigkeit anhand einer Haltezeit, sondern die Scherdeformation in μm nach 15 min Scherbelastung ermittelt. Bei diesem Test werden die Proben parallel zur Verklebungs- beziehungsweise Laminationsfläche mit relativ hohen Kräfte n (Gewichte n) belastet. Im Falle der so genannten High Performance Acrylatklebemassen werden die Proben zum Beispiel mit Gewichten von 500 g bei einer Verklebungsfläche von 5 cm² belastet.

Analog der Testergebnisse für die Scherfestigkeit wird unter diesen Testbedingungen ebenfalls eine Delamination der Grenzfläche zwischen den Haftklebmasseschichten innerhalb der 15 min Messzeit beobachtet, wenn diese ohne jegliche Vorbehandlung laminiert wurden. Wird jedoch mindestens eine der Grenzflächen unmittelbar vor der Lamination einer chemischen oder physikalischen Vorbehandlung unterzogen, wird keine Delamination beobachtet, und die Scherdeformation ist im Bereich der Klebmassemonoschicht. Wird der Scherdeformationstest mit einem zu kleinen Gewicht durchgeführt, ist der Test nicht aussagekräftig bezüglich der Verbundfestigkeit einer Laminatgrenzfläche aus zwei Haftklebemassen.

Die deutliche Verbesserung der Verbundfestigkeit der erfindungsgemäßen Haftklebmasselaminate wird ebenfalls durch Messung der Schälfestigkeit (Klebkraft, Peel), zum Beispiel entsprechend PSTC-1, bestätigt. Laminate ohne Vorbehandlung neigen in diesem Test zum Delaminieren. Die Messung einer Klebkraft auf einem Prüfuntergrund wie zum Beispiel Stahl ist nicht möglich. Wird jedoch mindestens eine der beiden zu laminierenden Oberflächen einer chemischen oder physikalischen Vorbehandlungsmethode unterzogen, beobachtet man bei der Klebkraftmessung keine Delaminierung des Verbundes an der Grenzfläche.

Für den Fachmann überraschend zeigt sich, dass durch eine chemische oder physikalische und im speziellen durch eine Corona-Vorbehandlung mindestens einer der beiden Klebmasseoberflächen unmittelbar vor der Laminierung eine erhebliche Steigerung der Verbundfestigkeit der Grenzfläche des Laminats beziehungsweise der Verankerung zwischen zwei Laminatschichten ergibt. Dieser Effekt wird überraschenderweise sogar bei hochvernetzten Reinacrylaten-Klebmassen beobachtet. Die hochvernetzten Reinacrylaten-Klebmassen, vom Fachmann auch als High Performance Acrylat-Klebemassen bezeichnet, zeichnen sich durch eine sehr hohe Kohäsion (Scherfestigkeit) aus. Im Falle einer Lamination zweier Reinacrylat-Klebmasseschichten wird eine drastische Verschlechterung der Scherfestigkeit ($P_{Laminat}$ < 10 %) bedingt durch die schlechte Verbundfestigkeit der Klebmasseschichten beobachtet. Beim Scher- und beim Scherdeformationstest findet typischerweise immer ein Versagen an der Grenzfläche zwischen den Klebmasseschichten statt. Durch die bevorzugte Corona-Vorbehandlung der Klebmassenoberfläche unmittelbar vor der Laminierung wird überraschenderweise und vom Fachmann nicht vorhersehbar beobachtet, dass die Scherfestigkeiten und damit Verbundfestigkeiten dieser Laminate gleich gut wie die der reinen Klebmassemonoschichten sind.

Verschiedene Methoden der Oberflächenvorbehandlung von Polymerfolien, Metall- oder Holzoberflächen zur Verbesserung der Haftung von Farben und Lacken sind aus der Literatur bekannt ("Polymer Surface" F. Garbassi et al, John Wiley Verlag 1998 und in "Kunststoff-Folien", Nentwig, Carl Hanser Verlag, 1994, Seiten 159ff). In der Praxis wird die Oberfläche von polymeren Trägerfolien zum Beispiel auf Basis von Polyestern oder Polyolefinen wie zum Beispiel Polypropylen oder Polyethylen durch eine chemische Behandlung, durch Beschichtung oder durch physikalische Methoden derart aktiviert, dass zum Beispiel Druckfarben, Lacke oder auch Klebmassen besser auf der Folienoberfläche verankern. Die beobachtete verbesserte Verankeru ng beruht auf einem verbesserten Benetzungsverhalten und/oder auf einer Steigerung der physikalischen Wechselwirkungen (zum Beispiel Dipol-Dipol-Wechselwirkungen, van-der-Waals-Wechselwirkungen, Wasserstoffbrückenbindungen) und/oder auf der Erzeugung chemischer Bindungen. Bei der chemischen Vorbehandlung werden die Folienoberflächen zum Beispiel mit starken oxidierenden Säuren wie Trichloressigsäure oder Chromschwefelsäure angeätzt und dadurch funktionelle Gruppen an der Folienoberfläche erzeugt.

Als Beschichtungen zur Verbesserung der Haftung - dem Fachmann als Primer bekannt - sind Dispersions- und Lösungsmittelsysteme, zum Beispiel auf Basis von isopren- oder butadienhaltigen Kautschuk, Cyklokautschuk, Polyvinylchlorid- und/oder Polyvinylidenchlorid Homo- oder Copolymeren, bekannt. Entsprechende Primer können ebenfalls reaktive Additive wie Isocyanate oder Epoxyharze enthalten. Beschreibungen üblicher Primer finden sich zum Beispiel in "Handbook of Pressure Sensitive Adhesive Technology", D. Satas, (3. Auflage).

In der Technik weit verbreitete Verfahren zur Oberflächenbehandlung von Polymerfolien sind physikalische Methoden wie Flammen-, Plasma- und Coronabehandlung. Bei diesen Verfahren werden ebenfalls funktionelle Gruppen an der Oberfläche des Polymerfilms erzeugt. Bei der Flammen- und Coronabehandlung handelt es sich um eine Oxidation der Oberfläche, die eine Erhöhung der Polarität und damit der Oberflächenenergie (Oberflächenspannung) und somit der Benetzbarkeit und Verankerung von Druckfarben, Lacken und Klebmassen zur Folge hat. Die erhaltenen funktionellen Gruppen können durch erhöhte Dipol-Dipol-Wechselwirkung, Wasserstoffbrückenbindungen und/oder durch chemische Reaktion in der Grenzfläche die Haftung der Beschichtung auf der Polymerfolie erhöhen. In der Literatur wird auch die Erzeugung von reaktiven Gruppen wie Radikalen an der Polymeroberfläche diskutiert (R. Quack, "Corona-Technologie", Coating, 3/2000, Seite 86; F. Förster et al, "Neue Entwicklung in der Coronatechnologie", Flexoprint, 8/2002, Seite 25).

Überraschend und nicht vom Fachmann vorhersehbar steigern die chemische n und physikalischen Vorbehandlungsmethoden und im speziellen die Coronabehandlung die Verbundfestigkeit von zwei aufeinander laminierten Klebmasseschichten. Besonders überraschend ist dieser Effekt bei hochvernetzten Reinacrylatklebmassen, den so genannten High Performance Acrylat-Haftklebmassen.

Das Phänomen einer Verbesserung der Verbundfestigkeit, mithin der Adhäsion der Grenzschichten von zwei oder mehr aufe inander laminierten Haftklebmasseschichten durch chemische oder physikalische Vorbehandlung mindestens einer der zu laminierenden Haftklebemasseoberfläche wird überraschenderweise bei allen bekannten Klebmassen beobachtet. Dabei ist es unerheblich, ob die Klebmassen aus der Schmelze (Hotmelt), aus Lösung in einem organischen Lösemittel oder in Form ihrer wässrigen Dispersion beschichtet werden. Die chemische Basis der Polymere, aus der die zu laminierenden Haftklebmassen bestehen, kann beispielsweise durch Naturkautschuk, Polyacrylate, Silikone, synthetische Kautschuke wie Polyisopren, Polybutadien, Polybuten, Polyisobutylen, Styrol-Block-Copolymere, Ethylen-Vinylacetat oder auch Polyurethan gestellt werden, um nur einige typische zu nennen. Es ist möglich, vorgenannte Materialien in ihrer reinen Form (als Reinsubstanzen), in Kombination miteinander oder in Abmischung mit üblichen Additiven wie Klebharzen, Weichmachern, Füllstoffen, Farbstoffen, Pigmenten oder Alterungsschutzmitteln als Haftklebmasse zu verwenden. Die obige Aufzählung von Polymeren und Additiven zur Herstellung erfindungsgemäß, nutzbarer Haftklebemassen ist nicht abschließend zu sehen, sondern es gibt durchaus weitere, dem Fachmann bekannte Polymere und Additive, die ebenfalls in der Erfindung zum Einsatz kommen können. Eine ausführliche Beschreibung unterschiedlichster Arten von Haftklebmassen und deren Zusammensetzung ist zum Beispiel in "Handbook of Pressure Sensitive Adhesive Technology", D. Satas, zu finden (Kapitel "Acrylic Adhesive" sowie Kapitel 11, 12, 13, 14 und 18 (3. Auflage)).

Bei den zwei oder mehr aufeinander laminierten Klebmasseschichten handelt es sich vorzugsweise um Klebmassen mit identischer Zusammensetzung. Bei mehr als zwei aufeinander laminierten Klebmasseschichten weisen weiter vorzugsweise sämtliche Schichten eine identische Zusammensetzung auf. Eine Verwendung und Laminierung von unterschiedlichen Klebmassen ist jedoch nicht vom erfinderischen Gedanken ausgeschlossen. Gemäß einer anderen vorteilhaften Ausführung der Erfindung weisen somit bei mehr als zwei aufeinander laminierten Klebmasseschichten mindestens zwei Schichten eine unterschiedliche Zusammensetzung auf

Bevorzugter Gegenstand der vorliegenden Erfindung ist ein Selbstklebeband bestehend aus einem Laminat von zwei oder mehreren Reinacrylat-Haftklebmasseschichten identischer Zusammensetzung.

Vorzugsweise bestehen die Haftklebmassen aus einem oder mehreren Copolymeren, in denen acrylische Monomereinheiten den Hauptbestandteil bilden. Zur Erzeugung einer ausreichenden Kohäsion werden die Polymere vorzugsweise vernetzt. Des Weiteren enthalten die Haftklebmassen gemäß einer weiteren bevorzugten Ausführungsform keinerlei Zusätze an Klebharzen oder Weichmachern.

Die Haftklebemasseschichten des erfindungsgemäßen Selbstklebebands bestehen in einer weiteren bevorzugten Ausführung aus einem oder mehreren Copolymeren aus zumindest den folgenden Monomeren:

c1) 70 bis 100 Gew.-% Acrylsäureester und/oder Methacrylsäureester beziehungsweise deren freie Säuren mit der folgenden Formel

$$CH_2 = C(R_1)(COOR_2),$$

wobei $R_1$ = H oder $CH_3$ und $R_2$ = H und/oder lineare, verzweigte und(oder) zyklische Strukturelemente enthaltende Alkylketten mit 1 bis 30 C-Atomen sind,

c2) 0 bis 30 Gew.-% weitere olefinisch ungesättigte Monomere, insbesondere solche enthaltend spezifische funktionelle Gruppen oder solche, die zum Beispiel der Einstellung der Glasübergangstemperatur oder weiterer physikalischer und/oder chemischer Eigenschaften der Polymere dienen.

In einer sehr bevorzugten Auslegung werden als Monomere c1) Acrylmonomere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung einschränken zu wollen, sind:

n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere wie zum Beispiel t-Butylacrylat und 2-Ethylhexylacrylat.

Weitere Verbindungsklassen, die ebenfalls in geringen Mengen von kleiner 10 Gew.-% unter c1) hinzugesetzt werden können, sind:

Methylmethacrylat, Cyclohexylmethacrylat, Isobornylacrylat und Isobornylmethacrylat.

In einer sehr bevorzugten Auslegung werden für die Monomere c2) Vinylester, Vinylether, Vinylhalogenide, Vinylidenhalogenide, Vinylverbindungen mit aromatischen Cyclen und Heterocyclen in α-Stellung eingesetzt. Auch hier seien einige Beispiele genannt, ohne dass die Aufzählung als abschließend zu betrachten ist:

Vinylacetat, Vinylformamid, Vinylpyridin, Ethylvinylether, Vinylchlorid, Vinylidenchlorid und Acrylnitril.

In einer weiteren sehr bevorzugten Auslegung werden für die Monomere c2) Monomere mit folgenden funktionellen Gruppen eingesetzt:

Hydroxy-, Carboxy-, Epoxy-, Säureamid-, Isocyanato- oder Aminogruppen.

In einer vorteilhaften Variante werden für c2) Acrylmonomere entsprechend der allgemeinen Formel eingesetzt:

$$CH_2 = C(R_1)(COOR_3),$$

wobei $R_1$ = H oder $CH_3$ ist und der Rest $R_3$ eine funktionelle Gruppe darstellt oder beinhaltet, welche eine nachfolgende UV-Vernetzung der Haftklebemasse unterstützt, welche zum Beispiel in einer besonders bevorzugten Auslegung eine H-Donor Wirkung besitzt.

Die zuvor beschriebenen besonders bevorzugten Reinacrylat-Klebmassen enthalten vorzugsweise ebenfalls keine klebrigmachende Harze oder Weichmacher (Plastifizierungsmittel).

Additive wie Füllstoffe (zum Beispiel Fasern, Ruß, Zinkoxid, Titandioxid, Kreide, Voll- oder Hohlglaskugeln, Mikrokugeln aus anderen Materialien, Glasfasern, Kieselsäure, Silikate, Nanopartikel), Compoundierunghilfsmittel und/ oder Alterungsschutzmittel, zum Beispiel in Form von primären und sekundären Antioxidantien oder in Form von Lichtschutzmitteln, können aber der Haftklebemasse zugesetzt werden.

Zusammenfassend besteht die bevorzugte Ausführungsform des erfindungsgemäßen Selbstklebebandes aus einer oder mehreren Polyacrylathaftklebemasse-Schichten, deren Oberfläche zumindest einseitig unmittelbar vor der Laminierung einem chemischen oder physikalischen Vorbehandlungsverfahren, insbesondere einer Coronavorbehandlung unterzogen wird, wobei die einzelnen Polyacrylathaftklebemasse-Schichten durch Coextrusion, Schmelz-, Lösemittel- oder Dispersionsbeschichtung hergestellt sind. Besonders bevorzugt ist eine Kommarakelbeschichtung der Polyacrylathaftklebemasse aus einem geeigneten Lösemittel oder Lösemittelgemisch.

Die für das erfindungsgemäße Selbstklebeband besonders bevorzugten Haftklebmassen bestehend aus Polyacrylat-Copolymeren ohne Zusatz von Klebharzen und/oder Weichmachern zeichnen sich durch eine besonders gute Kohäsion aus. Die sehr hohe Kohäsion entsprechender Haftklebemassenmonoschichten spiegelt sich in hohen Scherstandszeiten bei 25 °C, 40 °C und 70 °C bei Gewichtsbelastungen von 1 kg von größer 10000 min und einer Scherdeformation von kleiner als 100 $\mu$m bei 40 °C bei einer Gewichtsbelastung von 500 g wider.

Gemäß einer bevorzugten Ausführungsform der Erfindung enthält das Selbstklebeband neben dem Laminat keine weitere Schicht eines Trägermaterials. In diesem Fall handelt es sich um ein so genanntes Transfer-Klebeband. Die zu laminierenden Klebmasseschichten können aber mit einer Trägerfolie verbunden sein, so dass sich ein Selbstklebeband aus dem Laminat plus zumindest einem Trägermaterial ergibt. Laminiert werden selbstverständlich auch in diesem Fall eine erste Haftklebmasseschicht direkt mit einer zweiten Haftklebemassenschicht.
Überhaupt kann das Selbstklebeband neben dem Laminat ein oder mehrere Schichten eines oder unterschiedlicher Trägermaterialien aufweisen.

Als Trägermaterialien für das Selbstklebeband werden die dem Fachmann geläufigen und üblichen Trägermaterialien wie Folien aus Polyester, Polyethylen, Polypropylen, verstrecktem Polypropylen, Polyvinylchlorid, besonders bevorzugt Folien aus Polyethylenterephthalat (PET) verwendet. Diese Aufzählung ist nicht abschließend zu verstehen. Im Rahmen der Erfindung ist der Einsatz weiterer Folien auf zuvor nicht genannter Polymerbasis möglich.

Bei Verwendung einer Trägerfolie ist die Nutzung einer Primerschicht oder Coextrusionsschichten zwischen Trägerfolie und Haftklebemasse, insbesondere Polyacrylathaftklebemasse, oder eine physikalische Oberflächenbehandlung wie Beflammung, Corona oder Plasma der Trägerfolie zur Verbesserung der Haftung der Klebmasse auf der Trägerfolie vorteilhaft.

Die Gesamtdicke des Selbstklebebands beträgt vorzugsweise ohne Trennfolie mindestens 100 $\mu$m.
An die Dicke der einzelnen zu laminierenden Haftklebmasseschichten sind keine Beschränkungen gesetzt. In einer bevorzugten Ausführung beträgt die Dicke der einzelnen Haftklebmasseschichten 5 bis 120 $\mu$m und besonders bevorzugt 40 bis 100 $\mu$m.


**Prüfmethoden**


**Schälfestigkeit (Klebkraft)**


Die Prüfung der Schälfestigkeit (Klebkraft) erfolgt in Anlehnung an PSTC-1. Ein 2 cm breiter Streifen des Selbstklebebandes wird auf einer geschliffenen Stahlplatte als Prüfuntergrund durch fünfmaliges doppeltes Überrollen mittels einer 5 kg Rolle verklebt. Doppelseitige Klebebänder werden mit einer 36 $\mu$m dicken Hart-PVC-Folie rückseitig verstärkt. Die Platte wird eingespannt, der Selbstklebestreifen über sein freies Ende an einer Zugprüfmaschine unter einem Schälwinkel von 180° mit einer Geschwindigkeit von 300 mm/min abgezogen, und die dafür notwendige Kraft ermittelt. Die Messergebnisse sind in N/cm angegeben und über drei Messungen gemittelt. Alle Messungen werden in einem klimatisierten Raum bei 23 °C und 50 % relativer Luftfeuchte durchgeführt.

**Scherfestigkeit**

Die Prüfung erfolgt in Anlehnung an PSTC-7. Ein 1,3 cm breiter Streifen des Selbstklebebandes wird auf einem polierten Stahlplättchen auf einer Länge von 2 cm mit einer 2 kg-Rolle durch zweimaliges doppeltes Überrollen verklebt. Die Plättchen werden für 30 min unter Testbedingungen (Temperatur von 25 °C, 40 °C oder 70 °C und Luftfeuchtigkeit von 50 % relativer Luftfeuchte) aber ohne Last equilibriert. Dann wird das Testgewicht angehängt, so dass eine Scherbeanspruchung parallel zur Verklebungsfläche entsteht, und die Zeit gemessen, bis die Verklebung versagt. Ist eine Haltezeit von 10 000 min erreicht, so wird der Versuch vor Versagen der Klebbindung abgebrochen.

**Quantitative Ermittlung der Scherdeformation**

Ein 1 cm breiter Streifen des Selbstklebebandes wird auf einem polierten Stahlplättchen (Prüfuntergrund) auf einer Länge von 5 cm mit einer 2 kg-Rolle durch dreimaliges doppeltes Überrollen verklebt. Doppelseitige Klebebänder werden auf der Rückseite mit einer 50 $\mu$m starken Aluminiumfolie abgedeckt. Der Teststreifen wird mit einer 190 $\mu$m dicken PET-Folie verstärkt und anschließend k antengerade mit Hilfe einer Fixiervorrichtung abgeschnitten. Dabei steht die Kante des verstärkten Teststreifens 1 mm über der Kante des Stahlplättchen s. Die Plättchen werden für 15 min unter Testbedingungen (40 °C, 50% relative Luftfeuchte) im Messgerät aber ohne Last equilibriert. Anschließend wird das Testgewicht 500 g angehängt, so dass eine Scherbeanspruchung parallel zur Verklebungsfläche entsteht. Mittels eines Wegaufnehmers mit einer Auflösung im $\mu$m-Bereich wird in Abhängigkeit der Zeit der Scherweg graphisch aufgenommen.
Als Mikroscherweg $\mu$S1 wird der Scherweg (Scherstrecke) nach einer Gewichtsbelastung von 15 min angegeben.
Im Folgenden soll die Erfindung anhand mehrerer Beispiele näher erläutert werden, ohne damit die Erfindung unnötig einschränken zu wollen.

**Beispiele**

**Beispiel 1**

Ein für eine radikalische Polymerisation konventioneller Reaktor wurde mit 80 g Acrylsäure, 450 g n-Butylacrylat, 30 g t-Butylacrylat und 600 g Aceton befüllt. Nach 45 Minuten Durchleiten von Stickstoffgas unter Rühren wurde der Reaktor auf 58 °C hochgeheizt und 0,2 g Azo-bisisobutyronitril (AIBN, Vazo 64®, Firma DuPont) hinzugegeben. Anschließend wurde das äußere Heizbad auf 75 °C erwärmt, und die Reaktion konstant bei dieser Außentemperatur durchgeführt. Nach 1 h Reaktionszeit wurde wiederum 0,2 g AIBN hinzugegeben. Nach 3 h und 6 h wurde mit jeweils 100 g Aceton/Isopropanol (97:3) das Gemisch verdünnt. Zur Reduktion der Restinitiatoren wurden nach 8 h und nach 10 h jeweils 1 kg Bis-(4-tert.-Butylcyclohexanyl)-Peroxy-dicarbonat (Perkadox 16®, Firma Akzo Nobel) hinzugegeben. Die Reaktion wurde nach 22 h Reaktionszeit abgebrochen und auf Raumtemperatur abgekühlt.
Nach der Polymerisation wurde das Polymer mit Isopropanol auf einen Feststoffgehalt von 25 % verdünnt und dann mit 0,3 Gew.-% Polyisocyanat (Desmodur N 75, Firma Bayer) unter Rühren abgemischt. Anschließend wurde die Polymerlösung mit Hilfe eines Komma-Rakels auf ein silikonbeschichtetes Trennpapier beschichtet. Die Trocknung erfolgte für 10 Minuten bei 120 °C. Der Masseauftrag der Beschichtung betrug 50 g/m$^2$. Nach dem Beschichtungsschritt wurde die Klebmassenoberfläche in einer Laborcoronaanlage Corona-Plus Tape TF-415 der Firma Vetaphone mit einer Dosis von 50 Wmin/m$^2$ vorbehandelt.
Unmittelbar nach dieser Vorbehandlung wurde auf diese Klebmasseschicht eine zweite nicht vorbehandelte Klebmasseschicht mit gleicher Zusammensetzung und Schichtdicke dazu laminiert. Die Laminierung erfolgte bei Raumtemperatur mittels eines Handrollers.

**Beispiel 2**

Ein für eine radikalische Polymerisation konventioneller Reaktor wurde mit 28 g Acrylsäure, 290 g 2-Ethylhexylacrylat, 40 g Methylacrylat und 300 g Aceton/Isopropanol (97:3) befüllt. Nach 45 Minuten Durchleiten von Stickstoffgas unter Rühren wurde der Reaktor auf 58 °C hochgeheizt und 0,2 g Azo-bisisobutyronitril (AIBN, Vazo 64®, Firma DuPont) hinzugegeben. Anschließend wurde das äußere Heizbad auf 75 °C erwärmt, un d die Reaktion konstant bei dieser Außentemperatur durchgeführt. Nach 1 h Reaktionszeit wurde wiederum 0,2 g AIBN hinzugegeben. Nach 3 h und 6 h wurde mit jeweils 150 g Aceton/Isopropanol (97:3) das Gemisch verdünnt. Zur Reduktion der Restinitiatoren wurden nach 8 h und nach 10 h jeweils 0,4 g Bis-(4-tert.-Butylcyclohexanyl)-Peroxy-dicarbonat (Perkadox 16®, Firma Akzo Nobel) hinzugegeben. Die Reaktion wurde nach 22 h Reaktionszeit abgebrochen und auf Raumtemperatur abgekühlt.
Nach der Polymerisation wurde das Polymer mit Isopropanol auf einen Feststoffgehalt von 25 % verdünnt und dann mit 0,4 Gew.-% Aluminium(III)-acetylacetonat unter Rühren abgemischt. Anschließend wurde die Polymerlösung mit Hilfe eines Komma-Rakels auf ein silikonbeschichtetes Trennpapier beschichtet. Die Trocknung erfolgte für 10 Minuten bei 120 °C. Der Masseauftrag der Beschichtung betrug 50 g/m$^2$. Nach dem Beschichtungsschritt wurde die Klebmassenoberfläche in einer Laborcoronaanlage Corona-Plus Tape TF-415 der Firma Vetaphone mit einer Dosis von 50 Wmin/m$^2$ vorbehandelt.

Unmittelbar nach dieser Vorbehandlung wurde auf diese Klebmasseschicht eine zweite nicht vorbehandelte Klebmasseschicht mit gleicher Zusammensetzung und Schichtdicke dazu laminiert. Die Laminierung erfolgte bei Raumtemperatur mittels eines Handrollers.

**Beispiel 3**

Als Beispiel 3 wurden zwei Klebmasseschichten wie im Beispiel 2 beschrieben miteinander laminiert. Allerdings wurden hier beide Klebmasseoberflächen unmittelbar vor dem Laminieren mit einer Corona-Dosis von 50 Wmin/m$^2$ vorbehandelt. Die Laminierung erfolgte bei Raumtemperatur mittels eines Handrollers.

**Beispiel 4**

Ein für radikalische Polymerisationen konventioneller Reaktor wurde mit 8 kg Acrylsäure, 48 kg NTBAM, 8 kg Maleinsäureanhydrid, 368 kg 2-Ethylhexylacrylat, 368 kg n-Butyl-acrylat und 600 kg Aceton/Isopropanol (97:3) befüllt. Nach 45 Minuten Durchleiten mit Stickstoffgas unter Rühren wurde der Reaktor auf 58 °C hochgeheizt und 400 g Vazo 67® (Firma DuPont) hinzugegeben. Anschließend wurde das äußere Heizbad auf 75 °C erwärmt, und die Reaktion konstant bei dieser Außentemperatur durchgeführt. Nach 1 h Reaktionszeit wurde wiederum 400 g Vazo 67® (Firma DuPont) hinzugegeben. Die Reaktion wurde nach 48 h Reaktionszeit abgebrochen und auf Raumtemperatur abgekühlt. Es wurden dann 200 kg Harz Norsolene M1080® (Firma Cray Valley), 100 kg Harz Foral 85 (Firma Eastman), 11 kg/h PETIA (Firma UCB) sowie 1000 kg Siedegrenzbenzin zu der Masselösung zugegeben und darin aufgelöst.

Anschließend wurde die Polymerlösung mit Hilfe eines Komma-Rakels auf ein silikonbeschichtetes Trennpapier beschichtet. Die Trocknung erfolgte für 10 Minuten bei 120 °C. Der Masseauftrag der Beschichtung betrug 50 g/m$^2$. Nach dem Beschichtungsschritt wurde die Klebmassenoberfläche im Labor in einer Laborcoronaanlage Corona-Plus Tape TF-415 der Firma Vetaphone mit einer Dosis von 50 Wmin/m$^2$ vorbehandelt.

Unmittelbar nach dieser Vorbehandlung wurde auf diese Klebmasseschicht eine zweite nicht vorbehandelte Klebmasseschicht mit gleicher Zusammensetzung und Schichtdicke dazu laminiert. Die Laminierung erfolgte bei Raumtemperatur mittels eines Handrollers.

**Beispiel 5**

Als Beispiel 5 wurden fünf Klebmasseschichten wie im Beispiel 2 beschrieben miteinander laminiert. Hierbei wird unmittelbar vor dem Laminieren jeweils eine Klebmasseoberflächen mit einer Corona-Dosis von 50 Wmin/m$^2$ vorbehandelt. Die Laminierung erfolgte bei Raumtemperatur mittels eines Handrollers.

| | Beispiel 1 | Beispiel 2 | Beispiel 3 | Beispiel 4 | Beispiel 5 |
|---|---|---|---|---|---|
| Haftklebemasse | Rein-Acrylat | Rein-Acrylat | Rein-Acrylat | Acrylat Harz modifiziert | Rein-Acrylat |
| Klebmasseauftrag [g/m$^2$] | 2x50 | 2x50 | 2x50 | 2x50 | 5x50 |
| Oberflächenvorbehandlung vor der Laminierung | Coronabehand lung einseitig 50 Wmin/m$^2$ | Coronabehand lung einseitig 50 Wmin/m$^2$ | Coronabehand lung zweiseitig 2x 50 Wmin/m$^2$ | Coronabehand lung einseitig 50 Wmin/m$^2$ | Coronabehand lung jeweils einseitig 50 Wmin/m$^2$ |
| Laminierbedingungen | 25 °C Laminierung mit der Hand | 25 °C Laminierung mit der Hand | 25 °C Laminierung mit der Hand | 25 °C Laminierung mit der Hand | 25 °C Laminierung mit der Hand |
| Klebkraft auf Stahl [N/cm] | 6,2 | 5,9 | 6,0 | 10,5 | 9,2 |
| Scherdeformation 500 g, 40 °C [$\mu$m] | 53 | 63 | 69 | 230 (200g) | 91 |
| Scherfestigkeit bei 25 °C, 10 N [min] | > 10.000 | > 10.000 | > 10.000 | 2.350 | > 10.000 |
| Scherfestigkeit bei 40 °C, 10 N [min] | > 10.000 | > 10.000 | > 10.000 | 701 | > 10.000 |
| Scherfestigkeit bei 70 °C, 10 N [min] | > 10.000 | > 10.000 | > 10.000 | 71 | > 10.000 |
| Scherfestigkeit der Monoschicht $t^S_o$ bei 25 °C/ 40 °C/ 70 °C [min] | jeweils > 10.000 | jeweils >10.000 | jeweils >10.000 | 2840/ 781/ 83 | jeweils >10.000 |
| $P_{Laminat} = 100{*}t^S_{A/B}/t^S_o$ 25 °C/ 40 °C/ 70 °C [%] | ~ 100 | ~ 100 | ~ 100 | 83/ 89/ 86 | ~ 100 |

**Gegenbeispiele**

**Gegenbeispiel 1**

Als Gegenbeispiel 1 wurden zwei Klebmasseschichten wie im Beispiel 2 beschri eben miteinander laminiert. Die Klebmasseoberfläche wurde vor der Laminierung nicht vorbehandelt. Die Laminierung erfolgte bei Raumtemperatur mittels eines Handrollers.

**Gegenbeispiel 2**

Als Gegenbeispiel 2 wurden zwei Klebmasseschichten wie im Beispiel 4 beschri eben miteinander laminiert. Die Klebmasseoberfläche wurde vor der Laminierung nicht vorbehandelt. Die Laminierung erfolgte bei Raumtemperatur mittels eines Handrollers.

**Gegenbeispiel 3**

Als Gegenbeispiel 3 wurde die Klebmassebeschichtung des Beispieles 2 nochmals mit der Klebmasselösung aus Beispiel. 2 beschichtet. Die Trocknung erfolgte für 10 Minuten bei 120 °C. Der Masseauftrag der Tandembeschichtung betrug 100 g/m$^2$.

Beim Trocknungsprozess wurde eine vermehrte Blasenbildung beobachtet.

**Gegenbeispiel 4**

Als Gegenbeispiel 4 wurden zwei Klebmasseschichten wie im Beispiel 2 beschrieben miteinander laminiert. Die Klebmasseoberfläche wurde vor der Laminierung nicht vorbehandelt. Die Laminierung erfolgte bei 100 °C mittels eines Rollenlaminators.

|  | Gegenbeispiel 1 | Gegenbeispiel 2 | Gegenbeispiel 3 | Gegenbeispiel 4 |
|---|---|---|---|---|
| Haftklebemasse | Rein-Acrylat | Acrylat harzmodifiziert | Rein-Acrylat | Rein-Acrylat |
| Klebmasseauftrag [g/m$^2$] | 2x50 | 2x50 | 2x50 | 2x50 |
| Laminierbedingungen | 25 °C Laminierung mit der Hand | 25 °C Laminierung mit der Hand | 25 °C Laminierung mit der Hand | 100 °C Rollenlaminator |
| Oberflächenvorbehandlung vor der Laminierung | keine Vorbehandlung | keine Vorbehandlung | Tandembeschichtung keine Vorbehandlung | keine Vorbehandlung |
| Klebkraft auf Stahl [N/cm] | 2,6 Delaminierung | 7,3 Delaminierung | 4,8 Delaminierung | 4,2 Delaminierung |
| Scherdeformation 500 g, 40 °C [$\mu$m] | Delaminierung | Delaminierung | Delaminierung | Delaminierung |
| Scherfestigkeit bei 25 °C, 10 N [min] | 750 | 310 | 890 | 770 |
| Scherfestigkeit bei 40 °C, 10 N [min] | 260 | 120 | 610 | 220 |
| Scherfestigkeit bei 70 °C, 10 N [min] | 80 | 23 | 260 | 110 |
| Scherfestigkeit der Monoschicht $t^S_o$ bei 25 °C/ 40 °C/ 70 °C [min] | jeweils >10.000 | 2840/ 781/ 83 | jeweils >10.000 | jeweils >10.000 |
| $P_{Lammat}=100*t^S_{A/B}/t^S_o$ 25 °C/ 40 °C/ 70 °C [%] | < 8/ 3/ 0,8 | < 11/ 15/ 28 | < 9/ 6/ 3 | < 8/ 2/ 1 |

**Patentansprüche**

1. Selbstklebeband, enthaltend ein Laminat aus mindestens zwei direkt aufeinander laminierten Haftklebmasseschichten A und B, wobei eine oder beide der aufeinanderzulaminierenden Oberflächen der Haftklebemasseschichten A und B vor dem Aufeinanderlaminieren chemisch und/oder physikalisch vorbehandelt sind und wobei die Scherfestigkeit $tS_{A/B}$ des Selbstklebebandes bei 25 °C, 40 °C und 70 °C und einer Gewichtsbelastung von 1000 g mindestens 80 % der Scherfestigkeit $tS_o$ der Haftklebeschicht A oder der Haftklebeschicht B beträgt, wobei $tS_o$ die Scherfestigkeit der Haftklebeschicht mit der geringeren Scherfestigkeit darstellt, wobei die Haftklebemassen aus einem Copolymeren aus zumindest folgenden Monomeren

   c1) 70 bis 100 Gew.-% Acrylsäureester und/oder Methacrylsäureester beziehungsweise deren freie Säuren mit der folgenden Formel

   $$CH_2 = C(R_1)(COOR_2),$$

   wobei $R_1$ = H oder $CH_3$ und $R_2$ = H und/oder lineare, verzweigte und/oder zyklische Strukturelemente enthaltende Alkylketten
   mit 1 bis 30 C-Atomen sind,
   c2) 0 bis 30 Gew.-% weitere olefinisch ungesättigte Monomere, insbesondere solche enthaltend spezifische funktionelle Gruppen oder solche, die der Einstellung der Glasübergangstemperatur oder weiterer physikalischer und/oder chemischer Eigenschaften der Polymere dienen.

2. Selbstklebeband nach Anspruch 1, **dadurch gekennzeichnet, dass** die Scherfestigkeit des Selbstklebebandes bei 25 °C, 40 °C und 70 °C und einer Gewichtsbelastung von 1000 g größer als 10 000 min ist.

3. Selbstklebeband nach Anspruch 1 oder 2, **dadurch gekennzeichnet, dass** das Selbstklebeband neben dem Laminat keine Schicht eines Trägermaterials enthält.

4. Selbstklebeband nach zumindest einem der Ansprüche 1 bis 3, **dadurch gekennzeichnet, dass**
   die Gesamtdicke des Selbstklebebands ohne Trennfolie mindestens 100 $\mu$m und/oder die Dicke der einzelnen Haftklebmasseschichten 5 bis 120 $\mu$m, bevorzugt 40 bis 100 $\mu$m beträgt.

5. Selbstklebeband nach zumindest einem der vorherigen Ansprüche, **dadurch gekennzeichnet, dass**
   physikalisch durch Flamm- oder Plasmavorbehandlung oder insbesondere durch Coronavorbehandlung und/oder chemisch durch polare oder reaktive Beschichtung vorbehandeln wird.

6. Selbstklebeband nach zumindest einem der vorherigen Ansprüche, **dadurch gekennzeichnet, dass**
   mindestens eine der zu laminierenden Klebmasseoberflächen unmittelbar vor dem Laminierprozess einer Coronabehandlung unterzogen wird.

7. Selbstklebeband nach zumindest einem der vorherigen Ansprüche, **dadurch gekennzeichnet, dass**
   die zwei Klebmasseschichten oder gegebenenfalls bei mehr als zwei aufeinander laminierten Klebmasseschichten sämtliche Schichten eine identische Zusammensetzung aufweisen.

8. Selbstklebeband nach zumindest einem der vorherigen Ansprüche, **dadurch gekennzeichnet, dass**
   die zwei Klebmasseschichten oder gegebenenfalls bei mehr als zwei aufeinander laminierten Klebmasseschichten mindestens zwei Schichten eine unterschiedliche Zusammensetzung aufweisen.

9. Selbstklebeband nach zumindest einem der vorherigen Ansprüche, **dadurch gekennzeichnet, dass**
   die Haftklebemassen keinerlei Zusätze an Klebharzen oder Weichmachern enthalten.

10. Selbstklebeband nach zumindest einem der vorherigen Ansprüche, **dadurch**

**gekennzeichnet, dass**
die Haftklebmassen aus einem oder mehreren Copolymeren bestehen, in denen Acrylat-Monomeren den Hauptbestandteil bilden, besteht und weiter vorzugsweise vernetzt sind.

11. Selbstklebeband nach Anspruch **1, dadurch gekennzeichnet, dass** als Monomere c1) Acrylmonomere eingesetzt werden, die Acryl- und Methacrylsäureester mit Alkylgruppen bestehend aus 4 bis 14 C-Atomen, bevorzugt 4 bis 9 C-Atomen umfassen.

12. Selbstklebeband nach Anspruch 1 oder 11, **dadurch gekennzeichnet, dass** für die Monomere c2) Vinylester, Vinylether, Vinylhalogenide, Vinylidenhalogenide, Vinylverbindungen mit aromatischen Cyclen und Heterocyclen in $\alpha$-Stellung eingesetzt werden.

**Claims**

1. Self-adhesive tape comprising a laminate composed of at least two pressure-sensitive adhesive (PSA) layers A and B laminated directly to one another, one or both of the surfaces to be laminated to one another of the PSA layers A and B having been chemically and/or physically pretreated prior to lamination, and the shear strength $t^S_{A/B}$ of the self-adhesive tape at 25°C, 40°C and 70°C under a weight load of 1000 g being at least 80% of the shear strength $t^S_o$ of the PSA layer A or of the PSA layer B, where $t^S_o$ represents the shear strength of the PSA layer having the lower shear strength, the pressure-sensitive adhesives being composed of a copolymer of at least the following monomers

   c1) 70% to 100% by weight of acrylic esters and/or methacrylic esters and/or their free acids, with the following formula

   $$CH_2 = C(R_1)(COOR_2),$$

   where $R_1$ = H or $CH_3$ and $R_2$ = H and/or alkyl chains having 1 to 30 C atoms and being linear, branched and/or containing cyclic structural elements,
   c2) 0% to 30% by weight of further olefinically unsaturated monomers, more particularly those containing specific functional groups or those which serve to set the glass transition temperature or other physical and/or chemical properties of the polymers.

2. Self-adhesive tape according to Claim 1, **characterized in that** the shear strength of the self-adhesive tape at 25°C, 40°C and 70°C under a weight load of 1000 g is greater than 10 000 min.

3. Self-adhesive tape according to Claim 1 or 2, **characterized in that** other than the laminate the self-adhesive tape does not contain any layer of a carrier material.

4. Self-adhesive tape according to at least one of Claims 1 to 3, **characterized in that** the total thickness of the self-adhesive tape without release film is at least 100 $\mu$m and/or the thickness of the individual PSA layers is 5 to 120 $\mu$m, preferably 40 to 100 $\mu$m.

5. Self-adhesive tape according to at least one of the preceding claims, **characterized in that** pretreatment takes place physically by flame or plasma pretreatment or more particularly by corona pretreatment and/or chemically by polar or reactive coating.

6. Self-adhesive tape according to at least one of the preceding claims, **characterized in that** at least one of the adhesive surfaces to be laminated is subjected to corona treatment immediately prior to the laminating operation.

7. Self-adhesive tape according to at least one of the preceding claims, **characterized in that** the two adhesive layers or, where there are more than two adhesive layers laminated to one another, all of the layers have an identical composition.

8. Self-adhesive tape according to at least one of the preceding claims, **characterized in that** the two adhesive layers or, where there are more than two adhesive layers laminated to one another, at least two layers have a different composition.

9. Self-adhesive tape according to at least one of the preceding claims, **characterized in that** the pressure-sensitive adhesives do not include any additions at all of tackifier resins or plasticizers.

10. Self-adhesive tape according to at least one of the preceding claims, **characterized in that** the pressure-sensitive adhesives are composed of one or more copolymers in which acrylate monomers form the principal constituent, and further are preferably crosslinked.

11. Self-adhesive tape according to Claim 1, **characterized in that** as monomers c1) use is made of acrylic monomers which comprise acrylic and methacrylic esters with alkyl groups consisting of 4 to 14 C atoms, preferably 4 to 9 C atoms.

12. Self-adhesive tape according to Claim 1 or 11, **characterized in that**, for the monomers c2), use is made of vinyl esters, vinyl ethers, vinyl halides, vinylidene halides, vinyl compounds with aromatic ring systems and heterocycles in $\alpha$-position.

### Revendications

1. Bande auto-adhésive, contenant un stratifié constitué d'au moins deux couches de matériau adhésif sensible à la pression A et B stratifiées directement l'une sur l'autre, une ou les deux des surfaces à stratifier l'une sur l'autre des couches de matériau adhésif sensible à la pression A et B étant prétraitées chimiquement et/ou physiquement avant la stratification l'une sur l'autre et la résistance au cisaillement $t^S_{A/B}$ de la bande auto-adhésive à 25 °C, 40 °C et 70 °C et à une charge en poids de 1 000 g étant d'au moins 80 % de la résistance au cisaillement $t^S_o$ de la couche adhésive sensible à la pression A ou de la couche adhésive sensible à la pression B, $t^S_o$ étant la résistance au cisaillement de la couche adhésive sensible à la pression qui présente la résistance au cisaillement la plus faible, les matériaux adhésifs sensibles à la pression étant à base d'un copolymère d'au moins les monomères suivantes :

c1) 70 à 100 % en poids d'un ester de l'acide acrylique et/ou d'un ester de l'acide méthacrylique ou leurs acides libres de la formule suivante

$$CH_2=C(R_1) (COOR_2)$$

dans laquelle $R_1$ = H ou $CH_3$ et $R_2$ = H et/ou chaînes alkyle contenant des éléments structuraux linéaires, ramifiés et/ou cycliques de 1 à 30 atomes C,

c2) 0 à 30 % en poids d'autres monomères oléfiniquement insaturés, notamment ceux qui contiennent des groupes fonctionnels spécifiques ou ceux qui servent à ajuster la température de transition vitreuse ou d'autres propriétés physiques et/ou chimiques des polymères.

2. Bande auto-adhésive selon la revendication 1, **caractérisée en ce que** la résistance au cisaillement de la bande auto-adhésive à 25 °C, 40 °C et 70 °C et à une charge en poids de 1 000 g est supérieure à 10 000 min.

3. Bande auto-adhésive selon la revendication 1 ou 2, **caractérisée en ce que** la bande auto-adhésive ne contient outre le stratifié aucune couche d'un matériau support.

4. Bande auto-adhésive selon au moins l'une quelconque des revendications 1 à 3, **caractérisée en ce que** l'épaisseur totale de la bande auto-adhésive sans film anti-adhésif est d'au moins 100 $\mu$m et/ou l'épaisseur des couches de matériau adhésif sensible à la pression individuelles est de 5 à 120 $\mu$m, de préférence de 40 à 100 $\mu$m.

5. Bande auto-adhésive selon au moins l'une quelconque des revendications précédentes, **caractérisée en ce qu'**elle est prétraitée physiquement par prétraitement à la flamme ou plasma ou notamment par prétraitement corona et/ou chimiquement par revêtement polaire ou réactif.

6. Bande auto-adhésive selon au moins l'une quelconque des revendications précédentes, **caractérisée en ce qu'**au moins une des surfaces de matériau adhésif à stratifier est soumise à un traitement corona directement avant le procédé de stratification.

7. Bande auto-adhésive selon au moins l'une quelconque des revendications précédentes, **caractérisée en ce que** les deux couches de matériau adhésif ou éventuellement, dans le cas de plus de deux couches de matériau adhésif stratifiées les unes sur les autres, toutes les couches présentent une composition identique.

8.  Bande auto-adhésive selon au moins l'une quelconque des revendications précédentes, **caractérisée en ce que** des deux couches de matériau adhésif ou éventuellement, dans le cas de plus de deux couches de matériau adhésif stratifiées les unes sur les autres, au moins deux couches présentent une composition différente.

9.  Bande auto-adhésive selon au moins l'une quelconque des revendications précédentes, **caractérisée en ce que** les matériaux adhésifs sensibles à la pression ne contiennent aucun additif de résines adhésives ou de plastifiants.

10. Bande auto-adhésive selon au moins l'une quelconque des revendications précédentes, **caractérisée en ce que** les matériaux adhésifs sensibles à la pression sont constitués d'un ou de plusieurs copolymères dont le constituant principal est formé par des monomères d'acrylate et qui sont de préférence également réticulés.

11. Bande auto-adhésive selon la revendication 1, **caractérisée en ce que** des monomères acryliques sont utilisés en tant que monomères c1), qui comprennent des esters de l'acide acrylique et méthacrylique avec des groupes alkyle constitués de 4 à 14 atomes C, de préférence de 4 à 9 atomes C.

12. Bande auto-adhésive selon la revendication 1 ou 11, **caractérisée en ce que** des esters de vinyle, des éthers de vinyle, des halogénures de vinyle, des halogénures de vinylidène, des composés de vinyle comprenant des cycles et hétérocycles aromatiques en position $\alpha$ sont utilisés pour les monomères c2).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20014891 U1

**In der Beschreibung aufgeführte Nicht-Patentliteratur**

- **F. GARBASSI et al.** Polymer Surface. John Wiley Verlag, 1998
- Kunststoff-Folien. Carl Hanser Verlag, 1994, 159ff
- **D. SATAS.** Handbook of Pressure Sensitive Adhesive Technology
- **R. QUACK.** Corona-Technologie. *Coating,* Marz 2000, 86
- **F. FÖRSTER et al.** Neue Entwicklung in der Coronatechnologie. *Flexoprint,* August 2002, 25
- Handbook of Pressure Sensitive Adhesive Technology. **D. SATAS.** Acrylic Adhesive